Europäisches Patentamt

European Patent Office

Office européen des brevets

(11) Veröffentlichungsnummer : **0 076 232**
**B1**

(12) **EUROPÄISCHE PATENTSCHRIFT**

(45) Veröffentlichungstag der Patentschrift :
04.03.87

(21) Anmeldenummer : 82810375.4

(22) Anmeldetag : 08.09.82

(51) Int. Cl.⁴ : **G 01 S 17/10, G 01 S 7/48**

(54) Verfahren zur elektrooptischen Distanzmessung, sowie Distanzmessgerät zur Durchführung des Verfahrens.

(30) Priorität : 29.09.81 CH 6249/81

(43) Veröffentlichungstag der Anmeldung :
06.04.83 Patentblatt 83/14

(45) Bekanntmachung des Hinweises auf die Patenterteilung : 04.03.87 Patentblatt 87/10

(84) Benannte Vertragsstaaten :
DE GB SE

(56) Entgegenhaltungen :
DE-A- 2 840 605
DE-B- 2 420 194
US-A- 3 325 750
US-A- 3 503 680
US-A- 3 645 624
US-A- 3 869 207

(73) Patentinhaber : KERN & CO. AG Werke für Präzisionsmechanik Optik und Elektronik

CH-5001 Aarau (CH)

(72) Erfinder : Meier, Dietrich, Dr.
Bläuenstrasse 792
CH-5015 Erlinsbach (CH)
Erfinder : Minder, Hans-Ulrich
Blumenstrasse 10
CH-4912 Aarwangen (CH)

(74) Vertreter : Seeger, Jan
c/o Kern & Co. AG
CH-5001 Aarau (CH)

## Beschreibung

Die Erfindung betrifft ein Verfahren zur Messung der Entfernung zwischen einem Objekt und einem Bezugspunkt, bei dem nacheinander eine Vielzahl von Lichtimpulsen von einem am Bezugspunkt angeordneten Sender zum Objekt und vom Objekt zurück zu einer Empfangseinrichtung in der Nähe des Senders übertragen werden und bei dem zur Gewinnung der Laufzeit der Lichtimpulse mittels eines photoelektrischen Empfängers Sende- und Empfangszeitpunkte der Lichtimpulse definierende elektrische Signalimpulse sowie mittels einer Torsignalschaltung zwischen diesen andauernde Torsignale erzeugt werden und die Zeitdauer jedes Torsignales durch Auszählung der Taktimpulse eines Clock-Oszillators in einem von der Torsignalschaltung gesteuerten Zähler bestimmt wird, sowie ein Distanzmessgerät zu dessen Durchführung.

Elektrooptische Distanzmessgeräte sind bekannt, beispielsweise aus CH-PS 551 628 und aus Allg. Vermessungsnachrichten, 80. Jahrgang, Heft 6/1973, S. 201-207. In diesem Fall sind die Lichtsignale durch eine kontinuierliche, mit 15 MHz amplitudenmodulierte Infrarot-Lichtquelle gegeben, und als Zeitdifferenz wird die Phasendifferenz zwischen gesendeter und empfangener Modulation bestimmt. Dazu werden elektronische Schaltungen zur Frequenzkonversion und zur digitalen Phasenmessung verwendet. Zur Erhöhung der Messgenauigkeit wird hier einfach eine grosse Anzahl (z. B. 300 000) aufeinanderfolgender Modulationsperioden ausgezählt und das Messergebnis durch arithmetische Mittelung berechnet.

Da derartige Geräte ausschliesslich mit Reflektoren am Ziel arbeiten, können Fehlmessungen infolge Reflexionsstörungen oder Fehlzielungen durch eine einfache Unterbrechungsautomatik vermieden werden, welche die Signalauswertung bei zu geringem Pegel des Reflexionssignales sperrt.

Bei ebenfalls bekannten Laser-Entfernungsmessern mit Laser-Generator zur Aussendung von impulsförmigen Lichtsignalen (vgl. DE-OS 28 40 605) auf das Ziel können Zielreflektoren entbehrlich sein, wobei aber die Empfindlichkeit für Fehlmessungen infolge Reflexionsstörungen, Fehlzielungen, Mehrfachechos usw. grösser ist, als bei Systemen der erstgenannten Art. Zur Verminderung dieser Empfindlichkeit sind Lichtempfänger mit steuerbaren Ausblendmitteln bekannt, die den Empfang nur während eines Zeitfensters freigeben, welches einem beschränkten Entfernungs-Messbereich entspricht. Allerdings dienen derartige bekannte Mittel in erster Linie dem Schutz des Lichtempfängers vor Schäden infolge zu starker Belichtung und nur nebenbei der Erhöhung der Messgenauigkeit.

Zur Erhöhung der Messgenauigkeit bei einem elektrooptischen Entfernungsmessgerät mit Auswertung einer Anzahl aufeinanderfolgender Phasendifferenzwerte ist andererseits durch die DE-AS 2 420 194 eine digitale Schaltung bekannt, die die statistische Varianz der Phasendifferenzwerte ermittelt, diese mit einem internen Prüfgrenzwert vergleicht und eine Anzeige des Messergebnisses nur freigibt, wenn die Varianz den Prüfgrenzwert nicht überschreitet. Bei einem derartigen Auswertungssystem tragen sämtliche Einzelmesswerte zur Bildung der Varianz und des Messergebnisses bei, also auch solche, die infolge von Reflexionsstörungen gar keine Aussage über die Messdistanz zulassen.

Schliesslich ist aus US-A-3 325 750 (General Electric Comp.) eine Zählschaltung für die Zeitdifferenz zwischen zwei aufeinanderfolgenden elektrischen Impulssignalen bekannt. Hierbei werden zwei Zählfre-quenzen $f_1$ und $f_2 = 1,01\ f_1$ verwendet. Mit dem Start-Impuls startet der Zähltakt mit der Frequenz $f_1$ und mit dem Stop-Impuls startet der Zähltakt mit der Frequenz $f_2$, wobei $f_1$ weiterläuft, bis eine Koinzidenz zwischen $f_1$ und $f_2$ auftritt. Die Zeitdifferenz ergibt sich als Summe der mit $f_1$ gezählten Perioden plus der mit $f_2$ gezählten Perioden.

Aufgabe der vorliegenden Erfindung ist es, ein Verfahren und eine Vorrichtung zur elektrooptischen Distanzmessung anzugeben, welches bzw. welche eine Messung auch auf nicht kooperative Ziele, sowie eine erhöhte Messgenauigkeit erlaubt und bei dem bzw. bei der nur solche Einzelmesswerte zur Distanzbildung ausgewertet werden, die mit einer bestimmten Wahrscheinlichkeit nicht durch Reflexionsstörungen verfälscht sind.

Diese Aufgabe wird bei einem Verfahren zur Messung der Entfernung zwischen einem Objekt und einem Bezugspunkt der eingangs genannten Art dadurch gelöst, dass für jeden von mindestens zwei Schwellwerten jeweils eine Vielzahl von während der Zeit zwischen dem Auftreten dieser Schwellwerte an entsprechenden Flanken von je zwei, den Sende- und Empfangszeitpunkt eines Lichtimpulses definierenden Signalimpulsen andauernden Torsignalen erzeugt wird und die diesen Torsignalen entsprechenden Zählergebnisse jeweils registriert werden, dass der Clock-Oszillator derart freilaufend betrieben wird, dass die Schaltzeitpunkte der Torschaltung nicht mit den Impulsen des Clock-Oszillators korreliert sind, dass durch das gewichtete Mittel der drei Zählergebnisse mit grösster, zweitgrösster und drittgrösster Häufigkeit zu jedem Schwellwert die Torsignaldauer ermittelt und aus der Abhängigkeit der so ermittelten Torsignaldauer vom Schwellwert die der Laufzeit der Lichtimpulse entsprechende Zeitdauer bestimmt wird, welche der gesuchten Entfernung zugeordnet ist.

Bei einer Variante dieses Verfahrens, bei der bestimmte Empfangszeitpunkte eines Lichtimpulses definierende Signalimpulse mittels Fenstersignalen für die Torsignalbildung gesperrt werden, ist es zweckmässig, dass mittels der Fenstersignale nach Abschaltung der Lichtimpulse aus einer periodischen Folge von Hilfsimpulsen zwei Vielzahlen je eines Paares von Sende- und Empfangszeitpunkte eines Lichtimpulses simulierenden Signalimpulsen zur Erzeugung der Torsignale ausgewählt werden, wobei das Verhältnis der Zeitabstände zwischen den Signalimpulsen je eines der Paare bekannt und ungleich eins ist und dass durch Linearkombination der für die Signalimpulspaare ermittelten Zeitdauern der konstante Fehler bei der Auszählung der Zeitdauer jedes Torsignales berechnet wird.

Die der der gesuchten Entfernung zugeordneten Laufzeit der Lichtimpulse entsprechende Zeitdauer wird aus der Abhängigkeit der ermittelten Torsignaldauer vom Schwellwert mit Vorteil so bestimmt, dass ein erster Schwellwert in der Grössenordnung des maximal auftretenden Rauschpegels des photoelektrischen Empfängers für die Lichtimpulse festgelegt wird, dass durch Veränderung des Arbeitspunktes des Empfängers für die Lichtimpulse dessen Rauschpegel so eingestellt wird, dass die Häufigkeit von durch Rauschimpulse ausgelösten Fehlmessungen der Impulslaufzeiten unter einem vorgegebenen Mass liegt, dass dann eine dem ersten Schwellwert entsprechende Torsignaldauer bestimmt wird, dass als ein zweiter Schwellwert etwa das Doppelte des ersten Schwellwertes gewählt und für diesen zweiten Schwellwert eine zweite Torsignaldauer bestimmt wird und dass aus den beiden Wertepaaren durch lineare Extrapolation eine einem Schwellwert Null entsprechende Torsignaldauer als Laufzeit der Lichtimpulse bestimmt wird.

Ist zum zweiten Schwellwert, beispielsweise infolge zu geringen Signalpegels keine Torzeit mehr definiert, so wird zweckmässig die Laufzeit aus der ersten Torsignaldauer durch Addition eines festen Korrekturwertes bestimmt.

Ein elektrooptisches Distanzmessgerät zur Durchführung des erfindungsgemässen Verfahrens mit
— einem Sender zur aufeinanderfolgenden Aussendung einer Vielzahl von Lichtimpulsen in Richtung des Objekts, dessen Distanz bestimmt werden soll,
— einer in unmittelbarer Nähe des Senders angeordneten Empfangseinrichtung für am Objekt reflektierte Lichtimpulse, der die ausgesendeten Lichtimpulse auch direkt über einen geräteinternen Referenzweg zugeführt werden und die einen sowohl von den direkt zugeführten als auch von den am Objekt reflektierten Lichtimpulsen beaufschlagten photoelektrischen Empfänger umfasst,
— einer ersten digitalen Schaltung mit einer an den Empfänger angeschlossenen Torsignalschaltung zur Erzeugung von Torsignalen jeweils für die Zeit zwischen dem Auftreten von dem Sende- und Empfangszeitpunkt eines jeden Lichtimpulses entsprechenden Signalimpulsen des Empfängers, einem Clock-Oszillator, einem Zähler zum Zählen der jeweils während der Dauer eines Torsignals vom Clock-Oszillator abgegebenen Taktimpulse, umfasst zweckmässig
— eine zweite digitale Schaltung mit
Einrichtungen zur Erzeugung von Startsignalen für die Aussendung der Lichtimpulse,
Einrichtungen zur Erzeugung einer Anzahl von unterschiedlichen jeweils eine Ansprechschwelle der Torsignalschaltung für die Signalimpulse des Empfängers bestimmenden Schwellwerten,
Einrichtungen zum getrennten Registrieren der im Zähler bei den verschiedenen Schwellwerten jeweils für eine Vielzahl von Lichtimpulsen bei freilaufendem Clock-Oszillator erhaltenen Zählergebnisse,
Einrichtungen zur Ermittlung der drei Zählerergebnisse mit der grössten, der zweitgrössten und der drittgrössten Häufigkeit jeweils für jeden Schwellwert, zur Bildung des gewichteten Mittelwerts dieser drei Zählergebnisse als Mass für die dem jeweiligen Schwellwert entsprechende Laufzeit der Lichtimpulse und zur Bestimmung der gesuchten Distanz aus der Abhängigkeit der ermittelten Laufzeiten von den Schwellwerten.

Die Erfindung wird nachfolgend anhand eines in den Zeichnungen schematisch dargestellten Ausführungsbeispieles näher erläutert. Es zeigen :
Figur 1   ein Gesamtschema eines erfindungsgemässen elektrooptischen Impuls-Distanzmessgerätes,
Figur 2   eine Schaltung für die Pulsformerstufe gem. Fig. 1,
Figur 3   eine Schaltung für den Komparator gem. Fig. 1 und
Figur 4   ein Signalablaufschema für ein Gerät gem. Fig. 1.

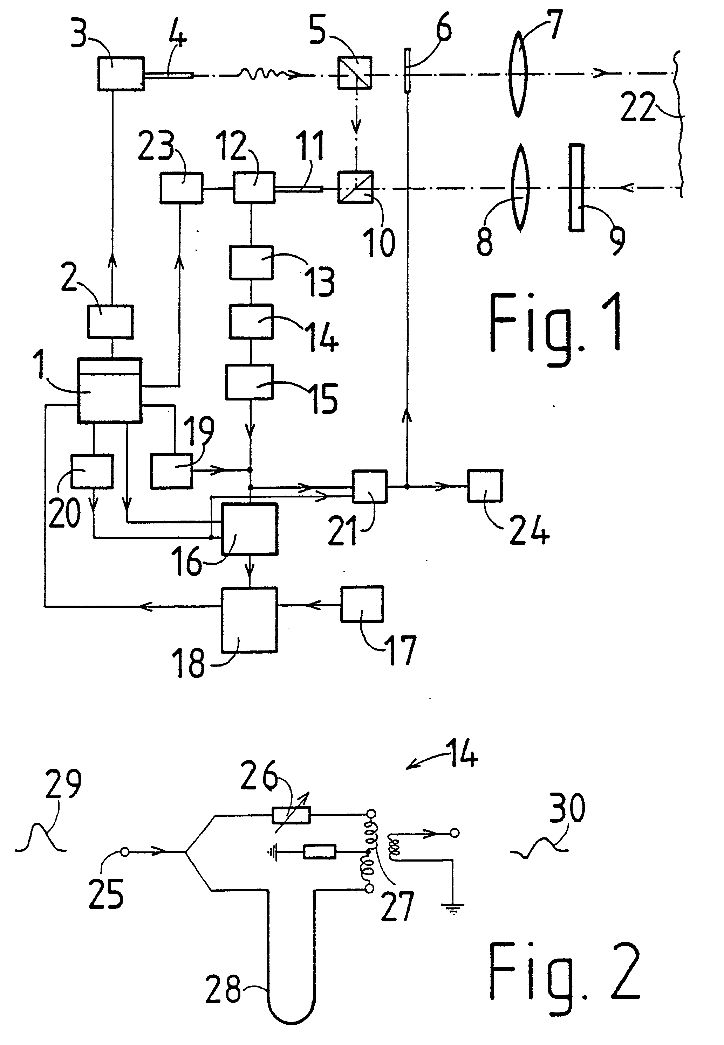

Das elektrooptische Distanzmessgerät gemäss Fig. 1 umfasst zur Aussendung sehr kurzer infraroter Lichtimpulse (IR-Wellenlänge $\lambda$ = 904 nm) eine Laserdiode 3. Die Aussendung der Lichtimpulse wird durch Stromimpulse angeregt, welche eine Treiberstufe 2 nach Auslösung durch ein Startsignal aus einer Prozessorstufe 1 erzeugt. Die Laserdiode 3 ist mit einer kurzen optischen Faser 4 verbunden, welche die Lichtimpulse zur Homogenisierung durchlaufen. Der Laserdiode 3 ist ein Lichtteilerprisma 5 nachgeschaltet, das etwa 1 % der optischen Leistung der Lichtimpulse abzweigt. Weiterhin durchlaufen die Lichtimpulse einen Flüssigkristall-Abschwächer 6, eine Sendeoptik 7 und den eigentlichen Messweg bis zu einem Objekt 22 am anderen Ende des Messweges. Dieses Objekt kann als kooperatives Ziel ein Spiegel oder eine Kombination von Spiegeln (Würfelecke, Reflektorfolie) sein, oder ein nichtkooperatives Messobjekt (Baum, Wand, Fahrzeug), welches einen Teil der Lichtimpulse zum Sender zurückstreut. Der zurückgestreute Teil der Lichtimpulse gelangt durch ein schmalbandiges Farbfilter 9 zur Verminderung von ebenfalls eindringendem Umgebungslicht und eine Empfängeroptik 8 auf ein zweites Lichtteilerprisma 10, welches etwa 1 % der optischen Leistung der im Prisma 5 abgezweigten Impulse als Kurzwegsignale wieder in den Hauptstrahlengang einführt. Kurzweg-Impulse und Messweg-Impulse gelangen zur lichtelektrischen Umsetzung auf eine Avalanche-Fotodiode 12 mit einer vorangesetzten kurzen optischen Faser 11.

Der Arbeitspunkt der Diode 12 wird über eine von der Prozessorstufe 1 gesteuerte Speisespannungsstufe 23 durch die geregelte Vorspannung eingestellt. Zur Verstärkung der umgesetzten elektrischen

3

Impulse ist ein Vorverstärker 13 vorgesehen. Bei schwachen oder gestörten Impulsen ist eine Pulsformerstufe 14 zur Optimierung der Impulsflanken zweckmässig. Nach Durchlaufen der Stufen 13 und 14 werden die Impulse in einem Verstärker 15 nochmals verstärkt und gelangen dann auf eine Komparatorstufe 16, der vom Prozessor 1 her ein einstellbares Schwellwertsignal zugeführt ist.

Infolge des zweimaligen Durchlaufens der Messstrecke zwischen den Prismen 5 und 10 und dem Objekt 22 haben der am Prisma 5 abgezweigte Kurzwegimpuls und der Messwegimpuls als einander zugeordnete Signalimpulse einen zeitlichen Versatz, aus dem die Länge der Messstrecke zu bestimmen ist. In der Komparatorstufe 16 wirkt das Kurzwegsignal beim Ueberschreiten des Schwellwertes als Startimpuls zum Erzeugen eines Torsignales, welches durch den zugeordneten Messwegimpuls als Stop-Impuls beendet wird und demnach während des genannten zeitlichen Versatzes andauert. Durch dieses Torsignal wird ein Zähler 18 zur Zählung der positiven Flanken eines Quarzoszillators 17 als Zeitnormal (Clock-Oszillator) aufgetastet. Beträgt die Frequenz des Oszillators 17 150 MHz, so entspricht ein im Zähler 18 eingezählter Impuls gerade einem 1 m-Schritt der Messdistanz. Das Zählresultat in Meter-Schritten wird zum Prozessor 1 übertragen und dort tabellenmässig gespeichert, während über die Treiberstufe 2 ein neuer Impuls an der Laserdiode 3 ausgelöst wird.

Zur Kontrolle der an der Empfängerdiode 12 einlaufenden Signale und zur Steuerung des Abschwächers 6 ist dem Verstärker 15 noch eine Signalregelungsstufe 21 mit Anzeigeeinrichtung 24 nachgeschaltet. Zur Auswahl von Startimpulsen oder zugehörigen Stopimpulsen umfasst die Regelungsstufe 21 eine Auswahllogik, die durch ein Fenstersignal vom Prozessor 1 angesteuert wird. Dieses Fenstersignal von einstellbarer Länge unterdrückt während einer bestimmten Zeit evtl. vorhandene Störimpulse an der Laserdiode 3. Die Dauer (Länge) des Fenstersignales wird in Codeform vom Prozessor 1 an eine Fensterschaltung 20 ausgegeben, die bei Auslösung des Laserimpulses das Fenstersignal als Rechteck erzeugt und an die Komparatorstufe 16 und die Signalregelungsstufe 21 ausgibt. Zur Bestimmung einer im Komparator 16 auftretenden, vom Schwellwert abhängigen Additionskonstanten für die Laufzeitmessung ist ein 5 MHz-Rechteck-Oszillator 19 vorgesehen, dessen Impulse anstelle der Start-Stop-Impulse vom Verstärker 15 in den Komparator 16 eingegeben und, wie unten genauer beschrieben, ausgewertet werden.

Das soweit beschriebene elektrooptische Distanzmessgerät gemäss Fig. 1 hat folgende Funktion :

Vor jedem Start eines Laserimpulses in der Diode 3 gibt die Prozessorschaltung 1 in codierter Form die Länge des Rauschunterdrückungs-Fensters an die Fensterschaltung 20, sowie die Höhe des Schwellwertes an die Komparatorstufe 16 aus. Nach Auslösung eines Laserimpulses durch ein Startsignal aus dem Prozessor 1 wird die Laufzeit zwischen den einander zugeordneten Laserimpulsen im Zähler 18 ausgezählt. Das Zählerresultat wird nach einer festen Zeit auf die Prozessorschaltung 1 übertragen. Dabei wird der Zähler auf 0 zurückgestellt. Auf diese Weise wird eine Gruppe von 10 000 Zählerresultaten durch die Schaltung 1 abgespeichert. Durch ein Sortierverfahren wird eine Tabelle der Resultate erstellt. Aus den 3 am häufigsten vorkommenden Resultaten wird durch gewichtete Mittelbildung das Distanzresultat, sowie der prozentuale Anteil der hierzu verwendeten Zählresultate gegenüber allen Zählresultaten berechnet.

Fig. 2 zeigt eine Ausführungsform der Pulsformerstufe 14 zur Optimierung der Impulsflanken der Empfangssignale. Die Signale werden am Eingang 25 geteilt. Eine Komponente läuft über einen Abschwächer 26 direkt auf einen Hybrid-T-Teiler 27, die andere Komponente läuft über eine Verzögerungsleitung 28 zum Teiler 27. Beide Komponenten werden also gegeneinander verschoben und mit entgegengesetzten Vorzeichen wieder zusammengesetzt. Wie durch die Signalformen 29, 30 angedeutet, ergibt diese Pulsformerstufe 14 eine höhere Impulsflanke, welche die Messung bei stark verrundeten und schwachen Signalen erleichtert.

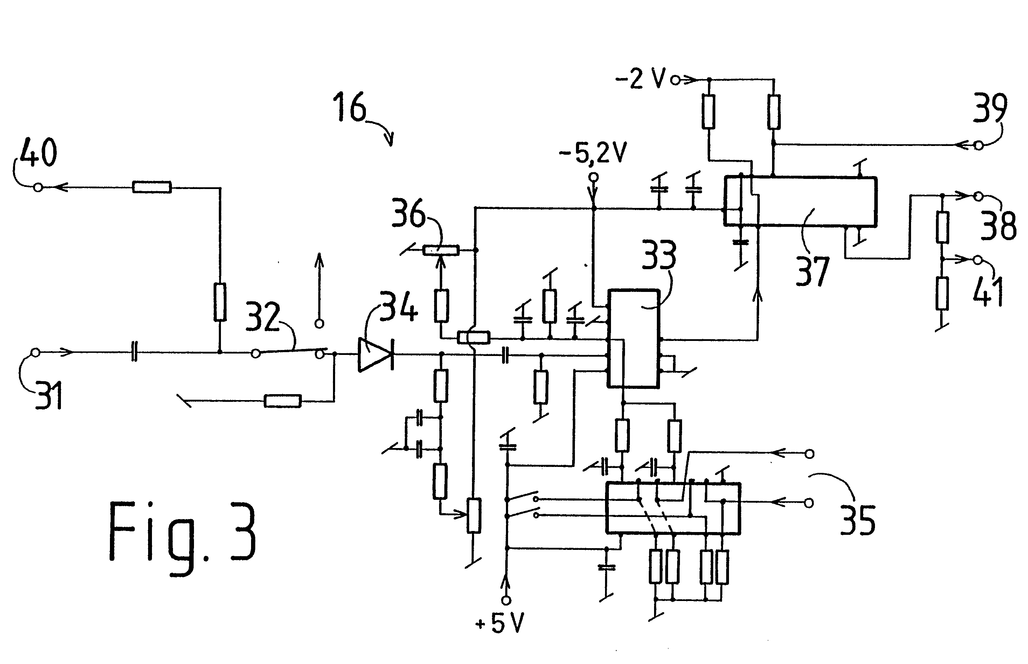

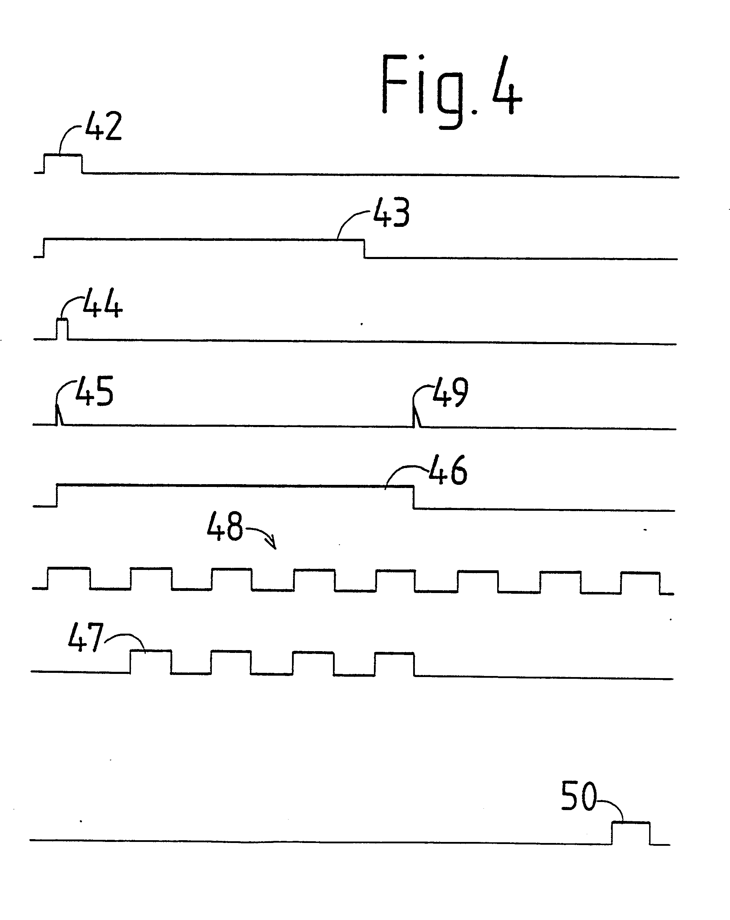

Fig. 3 zeigt eine Schaltung für die Komparatorstufe 16. Die Start- und Stopsignale vom Verstärker 15 gelangen auf den Eingang 31 und können mit einem Schalter 32 entweder auf die Signalregelungs stufe 21 für die Signalstärke-Anzeige oder auf einen schnellen Schwellwertschalter 33 geschaltet werden. Durch eine zwischen Schalter 32 und Schwellwertschalter 33 eingesetzte, vorgespannte Diode 34 werden die Signale zweckmässig auf ca. 50 mV limitiert. An einem zweiten Eingang 35 können durch ein binär codiertes Signal vom Prozessor 1 aus vier unterschiedliche Schwellwerte am Schwellwertschalter 33 eingestellt werden. Die Höhe dieser Schwellwerte kann mit einem Potentiometer 36 variiert werden. Die Ausgangssignale des Schwellwertschalters 33 schalten einen schnellen bistabilen Schalter 37 nur dann, wenn dieser durch ein an einem dritten Eingang 39 von der Fensterschaltung 20 her eingespeistes Fenstersignal vorbereitet ist. In diesem Fall entsteht am Ausgang 38 des Schalters 37 das Torsignal, dessen Zeitdauer zu bestimmen ist. Wurde am durch das Fenstersignal (43 in Fig. 4) vorbereiten bistabilen Schalter 37 vom Startsignal (45 in Fig. 4) ein Kippvorgang ausgelöst, so können Stopsignale (49 in Fig. 4) den Schalter 37 erst dann wieder zum Zurückkippen bringen, wenn kein Fenstersignal mehr anliegt. Die Sperrwirkung für die Stopsignale beginnt also erst nach Schaltwirkung durch das Startsignal. Zur Ueberprüfung der Ein- bzw. Ausgangssignale sind Messpunkte 40 bzw. 41 vorgesehen.

Vom Ausgang 38 der Komparatorstufe 16 gelangt das Torsignal auf einen Vorbereitungseingang des Zählers 18, sodass es durch die positiven Flanken des Quarzoszillators 17 asynchrom ausgezählt werden kann. Der Zähler 18 besitzt eine Rückstelleinheit, sodass er nach Ausgabe des Zählergebnisses auf 0 zurückgestellt werden kann. Ist die Torzeit länger als ein Maximalwert (z. B. 54,6 μsec entsprechend einer Messdistanz 8 192 m), so erzeugt der Zähler 18 einen Ueberlaufimpuls, der in die Komparatorstufe 16 als Stop-Signal eingekoppelt wird. Dies ist besonders bei kleinen Pegeln der empfangenen Laserimpulse zweckmässig, weil diese als Stop-Signale eventuell verloren gehen. Der Ueberlaufimpuls wird auch an den Prozessor 1 übertragen, damit die nächste messung erfolgen kann. Da nur ganze Meterschritte ausgezählt werden, dürfen die Signale vom Oszillator 17, vom Komparator 16, sowie das Fenstersignal der Stufe 20 nicht miteinander korreliert sein, damit keine systematischen Zählfehler sondern nur zufällige Zählfehler entstehen können. Deshalb können für eine gegebene Dauer des Torsignales zwei oder sogar drei benachbarte Werte gezählt werden. Aus der Häufigkeitsverteilung der drei häufigsten Zählergebnisse wird durch gewichtete Mittelbildung der Zwischenwert der Messdistanz berechnet. Die Interpolationsgenauigkeit steigt mit der Wurzel aus der Anzahl der Zählungen. Sie ergibt sich bei 10 000 Zählungen zu $\pm$ 0,5 cm.

Am dritten Eingang 39 der Komparatorstufe 16 wird vom Prozessor 1 über die Fensterschaltung 20 das Fenstersignal eingespeist, welches unerwünschte Stop-Signale vom Schwellwertschalter 33 (Fig. 3) unterdrückt. Dies hat folgenden Grund :

Zur Detektion der sehr schwachen, am Objekt 22 zurückgestreuten Teile der Impulse vom Laser 3 muss die Avalanche-Fotodiode 12 bis zur Durchbruchspannung vorgespannt werden. Dabei werden zufällige Lawinen ausgelöst, die zu Empfangsimpulsen führen, die nicht von den zu messenden Signalimpulsen unterschieden werden können (pop-noise). Ein solcher Impuls führt in der Komparatorstufe 16 zu einer Fehlinterpretation als Stop-Impuls. Der später einlaufende eigentliche Stop-Impuls kann dann gar nicht mehr detektiert werden. Mit dem Fenstersignal zur Rauschunterdrückung werden solche Fehlinterpretationen vermieden. Auch dient es zum Unterdrücken von unerwünschten Signal-Reflexionen aus dem vorderen Abschnitt des Messweges. Durch eine systematische Verlängerung des Fenstersignales an dessen Ende und wiederholte Messung wird eine, insbesondere für Messungen auf nicht kooperative Ziele notwendige hohe Detektionsempfindlichkeit erreicht.

Einen wesentlichen Zweck hat das Fenstersignal für die Bestimmung der in der Komparator-Stufe 16 auftretenden elektrischen Additionskonstanten. Damit nämlich der Zähler 18 die Länge des vom Komparator 16 gelieferten Torsignales durch die Impulse vom 150 MHz-Oszillator 17 hinreichend genau auszählen kann (1,5 cm Distanzfehler entspricht 100 psec Torsignalfehler), müssen die Flanken des Torsignales optimal sein. Ist dies der Fall, so ergeben sich dennoch bei Flankensteilheiten von 1 bis 2 nsec Differenzen der gemessenen Zeiten infolge eines unterschiedlichen Entscheidungsverhaltens des Zählers für abfallende und ansteigende Flanken seines Vorbereitungssignales. Der daraus resultierende Fehler in der Laufzeitmessung ist bei gleichbleibenden Betriebsbedingungen (Speisespannung, Temperatur) eine additive Konstante. Diese Konstante wird durch folgendes Verfahren gemessen und zur Korrektur der Zeitmessung verwendet.

Durch den 5 MHz-Rechteckoszillator 19 werden Hilfsimpulse gleicher Form wie die Start- und Stop-Signale am Ausgang des Verstärkers 15 erzeugt. Diese Impulse werden anstelle der Start-Stop-Signale am Eingang 31 des Komparators 16 eingegeben, wobei die Licht-Impulserzeugung an der Laserdiode 3 unterbrochen wird. Wählt man nun die Dauer des am Eingang 39 des Komparators 16 eingegebenen Fenstersignales so, dass Reflexionen aus Messdistanzen zwischen 0 und 30 m unwirksam sind, so fällt immer eine positive Hilfsimpulsflanke in das Sperrfenster und die nächste positive Flanke hinter das Sperrfenster, wobei die Phasenlage zwischen den Hilfsimpulsen und den Fenstersignalen beliebig sein kann. Es wird demnach die dem zeitlichen Abstand zwischen aufeinanderfolgenden positiven Hilfsimpulsflanken (200 nsec) entsprechende Distanz 30 m, vermehrt um die Additionskonstante C gemessen. Setzt man nun die Dauer des Fenstersignales entsprechend einer Messdistanz von 60 m, so wirkt immer eine positive Hilfsimpulsflanke als Startimpuls und die übernächste positive Flanke als Stopimpuls. Obwohl der Abstand der eingespeisten Hilfsimpulse (200 nsec) gleich bleibt, wird nun die Distanz 60 m, vermehrt um die Additionskonstante C gemessen. Die Additionskonstante C ergibt sich dann einfach aus der Differenz der Messergebnisse :

$$C = 2 \cdot (30\ m + C) - (60\ m + C) \cdot$$

Setzt man für den Abstand der positiven Hilfsimpulsflanken einen beliebigen Wert T, für die Länge des ersten Fenstersignales $m \cdot T$ (m > 0, ganz) und für die Länge des zweiten Fenstersignales $n \cdot T$ (n > m, ganz) voraus, so wird man Distanzen entsprechend $m \cdot T + C$ bzw. $n \cdot T + C$ messen und es ergibt sich die Additionskonstante

$$C = 1/n - m\ (n \cdot [m \cdot T + C] - m \cdot [n \cdot T + C]) \cdot$$

Da zur Auslösung der Messungen keine Start-Signale für die Laser-Treiberstufe 2 zur Verfügung stehen, werden zu diesem Zweck die Hilfsimpulse aus dem Oszillator 19 selbst verwendet. Die Messung der Distanzen 30 m + C und 60 m + C geschieht zweckmässig, wie oben zu Fig. 1 beschrieben, durch Mittelbildung aus je 10 000 Zählresultaten.

Es hat sich gezeigt, dass nicht nur, wie oben beschrieben, die Flanken des Torsignales eine Fehlerquelle für die Distanzmessung darstellen können. Die Empfängerdiode 12 setzt nämlich Amplitudenänderungen der empfangenen Laserimpulse in Formänderungen ihrer elektrischen Ausgangsimpulse um. Solche Fehler werden nun dadurch reduziert, dass Messungen mit unterschiedlichen Schwellwerten am Eingang 35 des Schwellwertschalters 33 der Komparatorstufe 16 (Fig. 3) erfolgen. Zweckmässig wird dabei ein erster Schwellwert in der Grössenordnung des maximal auftretenden Rauschpegels der Avalanche-Fotodiode 12 festgelegt. Durch Verändern der Diodenvorspannung mit der Speisespannungsstufe 23 wird nun der Rauschpegel soweit reduziert, dass die Häufigkeit der, wie oben im Zusammenhang mit dem Fenstersignal zur Rauschunterdrückung beschrieben, durch Rauschimpulse ausgelösten Fehlmessungen unter einer festen Grenze (z. B. 50 %) liegt. Mit dieser Einstellung und dem ersten Schwellwert wird, wie oben im Einzelnen beschrieben, eine erste Distanz gemessen. Dann wird mit einem zweiten, grösseren Schwellwert, z. B. gleich dem Doppelten des ersten Schwellwertes eine zweite Distanz gemessen. Aus diesen beiden Messungen wird durch lineare Extrapolation eine, einem Schwellwert Null zugeordnete Distanz bestimmt. Obwohl damit ein idealisierter linearer Verlauf der optischen und elektrischen Impulsflanken angenommen wird, hat sich gezeigt, dass durch das beschriebene erfindungsgemässe Messverfahren zuverlässige Distanzwerte gewonnen werden können.

Ergeben sich, z. B. infolge zu schwacher Reflexion der Laserimpulse, zum zweiten Schwellwert keine Stop-Signale mehr, so wird die dem Schwellwert Null entsprechende Distanz durch Addition eines Erfahrungswertes zur anfangs gemessenen ersten Distanz gewonnen.

Fig. 4 zeigt zusammenfassend die im als Beispiel beschriebenen elektrooptischen Distanzmessgerät gemäss Fig. 1 auftretenden Messignale, sowie deren zeitlichen Ablauf über der horizontalen Zeitachse. Die Messung beginnt mit einem, von der Prozessorstufe 1 ausgegebenen Startsignal 42. Vor jedem Startsignal werden von der Stufe 1 über die Stufe 20 die Länge des Fenstersignales zur Rauschunterdrückung, sowie die Grösse des Schwellwertes auf die Komparatorstufe 16 übertragen. Das Fenstersignal 43 beginnt mit dem Startsignal 42. Mit einer kleinen Verzögerung wird über die Treiberstufe 2 der Lichtimpuls 44 an der Laserdiode 3 ausgelöst. Nahezu gleichzeitig erreicht der Kurzwegimpuls 45 über die Prismen 5 und 10 die Empfängerdiode 12 und löst nach optoelektrischer Umsetzung im Komparator 16 den Beginn des Torzeit-Signales 46 aus. Nach diesem Beginn gelangt der erste Impuls 47 der vom Quarz-Oszillator 17 laufend erzeugten Uhr-Impulse 48 auf den Zähleingang des Zählers 18. Der über die Messstrecke und das Messobjekt 22 gelaufene Stop-Impuls 49 beendet die Zählung der Impulse 48. Das Zählerresultat wird nach einer festen Zeit, zweckmässig ca. 70 μsec entsprechend 10 km Messweg auf die Prozessorstufe 1 übertragen. Dabei gibt die Stufe 1 nach Abschluss der Datenübertragung ein Signal 50 ab, das den Zähler 18 auf 0 zurückstellt.

Im Einzelnen nicht näher beschriebene Varianten des beschriebenen erfindungsgemässen Ausführungsbeispieles, wie meteorologische Korrekturen des Messergebnisses, Meter-Fuss-Umrechnung, Unterbrechungsautomatik bei zu schwachem Reflex, automatisch fortlaufende Messung bei beweglichem Ziel, computercompatible Ergebnisausgabe usw. stehen dem Fachmann gemäss dem Stand der Technik zur Verfügung und können bei der vorliegenden Erfindung vorgesehen sein.

**Patentansprüche**

1. Verfahren zur Messung der Entfernung zwischen einem Objekt (22) und einem Bezugspunkt (5, 10), bei dem nacheinander eine Vielzahl von Lichtimpulsen von einem am Bezugspunkt angeordneten Sender (3) zum Objekt (22) und vom Objekt zurück zu einer Empfangseinrichtung (12) in der Nähe des Senders (3) übertragen werden und bei dem zur Gewinnung der Laufzeit der Lichtimpulse mittels eines photoelektrischen Empfängers (12) Sende- und Empfangszeitpunkte der Lichtimpulse definierende elektrische Signalimpulse (45, 49) sowie mittels einer Torsignalschaltung (16) zwischen diesen andauernde Torsignale (46) erzeugt werden und die Zeitdauer jedes Torsignales durch Auszählung der Taktimpulse eines Clock-Oszillators (17) in einem von der Torsignalschaltung gesteuerten Zähler (18) bestimmt wird, dadurch gekennzeichnet, dass für jeden von mindestens zwei Schwellwerten jeweils eine Vielzahl von während der Zeit zwischen dem Auftreten dieser Schwellwerte an entsprechenden Flanken von je zwei, den Sende- und Empfangszeitpunkt eines Lichtimpulses definierenden Signalimpulsen (45, 49) andauernden Torsignalen (46) erzeugt wird und die diesen Torsignalen entsprechenden Zählergebnisse jeweils registriert werden, dass der Clock-Oszillator (17) derart freilaufend betrieben wird, dass die Schaltzeitpunkte der Torschaltung (16) nicht mit den Impulsen des Clock-Oszillators (17) korreliert sind, dass durch das gewichtete Mittel der drei Zählergebnisse mit grösster, zweitgrösster und drittgrösster Häufigkeit zu jedem Schwellwert die Torsignaldauer ermittelt und aus der Abhängigkeit der so ermittelten Torsignaldauer vom Schwellwert die der Laufzeit der Lichtimpulse entsprechende Zeitdauer bestimmt wird, welche der gesuchten Entfernung zugeordnet ist.

2. Verfahren nach Anspruch 1, dadurch gekennzeichnet, dass ein erster Schwellwert in der Grössenordnung des Maximal auftretenden Rauschpegels des photoelektrischen Empfängers (12) für die Lichtimpulse festgelegt wird, dass durch Veränderung des Arbeitspunktes des Empfängers (12) für die Lichtimpulse dessen Rauschpegel so eingestellt wird, dass die Häufigkeit von durch Rauschimpulse ausgelösten Fehlmessungen der Impulslaufzeiten unter einem vorgegebenen Mass liegt, dass dann eine dem ersten Schwellwert entsprechende Torsignaldauer bestimmt wird, dass als ein zweiter Schwellwert etwa das Doppelte des ersten Schwellwertes gewählt und für diesen zweiten Schwellwert eine zweite Torsignaldauer bestimmt wird und dass aus den beiden Wertepaaren durch lineare Extrapolation eine einem Schwellwert Null entsprechende Torsignaldauer als Laufzeit der Lichtimpulse bestimmt wird.

3. Verfahren nach Anspruch 2, dadurch gekennzeichnet, dass die Laufzeit aus der ersten Torsignaldauer durch Addition eines festen Korrekturwertes bestimmt wird, wenn zum zweiten Schwellwert keine Torzeit mehr definiert ist.

4. Verfahren nach Anspruch 1, dadurch gekennzeichnet, dass bestimmte Empfangszeitpunkte eines Lichtimpulses definierende Signalimpulse (49) mittels Fenstersignalen (43) für die Torsignalbildung gesperrt werden, dass mittels der Fenstersignale (43) nach Abschaltung der Lichtimpulse aus einer periodischen folge von Hilfsimpulsen zwei Vielzahlen je eines Paares von Sende- und Empfangszeitpunkte eines Lichtimpulses simulierenden Signalimpulsen (45, 49) zur Erzeugung der Torsignale (46) ausgewahlt werden, wobei das Verhältnis der Zeitabstände zwischen den Signalimpulsen (45, 49) je eines der Paare bekannt und ungleich eins ist und dass durch Linearkombination der für die Signalimpulspaare (45, 49) ermittelten Zeitdauern der konstante Fehler bei der Auszählung der Zeitdauer jedes Torsignales berechnet wird.

5. Elektrooptisches Distanzmeßgerät zur Durchführung des Verfahrens nach einem der Ansprüche 1 bis 3, mit

— einem Sender (2-7) zur aufeinanderfolgenden Aussendung einer Vielzahl von Lichtimpulsen in Richtung des Objekts (22), dessen Distanz bestimmt werden soll,

— einer in unmittelbarer Nähe des Senders angeordneten Empfangseinrichtung (8-12) für am Objekt reflektierte Lichtimpulse, der die ausgesendeten Lichtimpulse auch direkt über einen geräteinternen Referenzweg zugeführt werden und die einen sowohl von den direkt zugeführten als auch von den am Objekt reflektierten Lichtimpulsen beaufschlagten photoelektrischen Empfänger (12) umfaßt,

— einer ersten digitalen Schaltung mit

(i) einer an den Empfänger angeschlossenen Torsignalschaltung (16) zur Erzeugung von Torsignalen jeweils für die Zeit zwischen dem Auftreten von dem Sende- und Empfangszeitpunkt eines jeden Lichtimpulses entsprechenden Signalimpulsen des Empfängers,

(ii) einem Clock-Oszillator (17),

(iii) einem Zähler (18) zum Zählen der jeweils während der Dauer eines Torsignals vom Clock-Oszillator abgegebenen Taktimpulse, gekennzeichnet durch

— eine zweite digitale Schaltung (1) mit

(iv) Einrichtungen zur Erzeugung von Startsignalen für die Aussendung der Lichtimpulse,

(v) Einrichtungen zur Erzeugung einer Anzahl von unterschiedlichen, jeweils eine Ansprechschwelle der Torsignalschaltung (16) für die Signalimpulse des Empfängers (12) bestimmenden Schwellwerten,

(vi) Einrichtungen zur getrennten Registrieren der im Zähler (18) bei den verschiedenen Schwellwerten jeweils für eine Vielzahl von Lichtimpulsen bei freilaufendem Clock-Oszillator (17) erhaltenen Zählergebnisse,

(vii) Einrichtungen zur Ermittlung der drei Zählerergebnisse mit der größten der zweitgrößten und der drittgrößten Häufigkeit jeweils für jeden Schwellwert, zur Bildung des gewichteten Mittelwerts dieser drei Zählergebnisse als Maß für die dem jeweiligen Schwellwert entsprechende Laufzeit der Lichtimpulse und zur Bestimmung des gesuchten Distanz aus der Abhängigkeit der ermittelten Laufzeiten von den Schwellwerten.

6. Elektrooptisches Distanzmessgerät nach Anspruch 5, dadurch gekennzeichnet, dass die zweite digitale Schaltung (1) Mittel (20) umfasst, die zur Sperrung von bestimmte Empfangszeitpunkte eines Lichtimpulses definierenden Signalimpulsen (49) für die Torsignalbildung Fenstersignale (43) erzeugen und an die Torsignalschaltung (16) der ersten digitalen Schaltung übertragen, ferner Mittel (19), welche in Verbindung mit den Mitteln (20) zur Erzeugung der Fenstersignale (43) Paare von Sende- und Empfangszeitpunkte eines Lichtimpulses simulierenden Signalimpulsen (45, 49) erzeugen, wobei das Verhältnis der Zeitabstände zwischen den Signalimpulsen (45, 49) vorgegebener Paare bekannt und ungleich eins ist, sowie Mittel, welche durch Linearkombination der für die Signalimpulspaare (45, 49) ermittelten Torsignal-Zeitdauern den konstanten Fehler der ersten digitalen Schaltung bei der Erzeugung der die Zeitdauern der Torsignale repräsentierenden Zählergebnisse berechnet.

7. Elektrooptisches Distanzmessgerät nach einem der Ansprüche 5 oder 6, gekennzeichnet durch eine der ersten digitalen Schaltung (16, 17, 18) vorangestellte Begrenzungsschaltung (34), welche die auszuwertenden, den Sende- und Empfangszeitpunkt eines Lichtimpulses definierenden Signalimpulse (45, 49) auf einen vorgegebenen Pegelbereich begrenzt.

**Claims**

1. A method for measuring the distance between an object (22) and a reference point (5, 10) wherein a plurality of light pulses is successively transmitted from a transmitter (3) mounted near the reference point to the object and therefrom back to a receiver apparatus (12) near the transmitter (3) and wherein electrical signal pulses (45, 49) are generated by means of a photoelectric receiver (12), said signal pulses defining the respective moments of transmission and reception of said light pulses, in order to obtain the duration of travel of said light pulses, and gating signals (46) are generated by means of a gating signal circuit (16) which last between the occurrence of said signal pulses, and the duration of each gating signal (46) is found by counting the clock pulses of a clock oscillator (17) by means of a counter (18) controlled by the gating signal circuit (16), thereby characterized, that a plurality of gating signals (46) is generated respectively for each one of at least two threshold levels, said gating signals (46) lasting between the occurrence of said threshold levels at respective edges of each pair of signal pulses (45, 49) defining the moments of transmission and reception of a light pulse, and that the count results for each of said gating signals are stored, that the clock oscillator (17) is run independently in order to uncorrelate the switching moments of the gating circuit (16) from the pulses of the clock oscillator (17), that the duration of the gating signal is found for each of said threshold levels by calculating the weighted mean of the three count results with decreasing frequency of occurence from the greatest downward, and that the duration corresponding to the time of travel of the light pulses is détermined from the dependence of the said duration of gating signals thus found from the said level of threshold, said time of travel corresponding to the distance to be measured.

2. Method as claimed in claim 1, thereby characterized, that a first threshold is set with a level about equal to the maximum noise level occurring at the photoelectric receiver (12) for the light pulses, that the noise level of the receiver for the light pulses (12) by a choice of its operating point is set such that the frequency of occurrence of faulty measurements of the times of travel of the pulses caused by noise pulses is below a given limit, that then a duration of gating signals is determined corresponding to said first threshold level, that a second threshold is set with a level about equal to twice the first threshold level and a second duration of gating signals is determined for said second threshold level, and that by linear interpolation from the determined first and second pairs of levels and durations a duration of gating signals corresponding to a threshold zero is determined and used as time of travel of the light pulses.

3. Method as claimed in claim 2, thereby characterized, that said time of travel is found from said first duration of gating signals by adding a constant correcting time for cases where no duration of gating signals may be found for the second threshold level.

4. Method as claimed in claim 1, thereby characterized, that signal pulses (49) defining a given span of moments of reception of a light pulse are blanked out from generation of the gating signals by means of window signals (43), that from a periodic series of auxiliary pulses two pluralities of pairs of signal pulses (45, 49), simulating moments of transmission and reception of light pulses are selected by means of the window signals (43) for generation of the gating signals (46), the transmission of the light pulses themselves being interrupted during this step and the ratio of the durations between the signal pulses (45, 49) of each said pair of respectively each said plurality of pairs being known and not equal to unity, and that the constant error occurring at the step of counting the duration of each gating signal is calculated by linear combination of the durations found for the pairs of signal pulses (45, 49) of respectively each of said pluralities.

5. Apparatus for electrooptical distance measurement for carrying out the method according to one of claims 1 to 3 with
— a transmitter (2-7) for successive transmission of a plurality of light pulses in the direction of the object (22) of which the distance is to be determined,
— a receiver apparatus (8-12) mounted immediately adjacent to the transmitter, said receiver apparatus receiving light pulses scattered at the object as well as the light pulses being transmitted on a direct reference path inside the apparatus, and said receiver apparatus comprising a photoelectric receiver (12) receiving the light pulses transmitted directly as well as those pulses scattered at the object,
— a first digital circuit with
(1) a gating signal circuit (16) joined to said receiver to generate gating signals each lasting between the occurrence of signal pulses at the output of the receiver, each said signal pulse corresponding respectively to the moment of transmission or reception of each light pulse,
(2) a clock oscillator (17),
(3) a counter (18) for counting the clock pulses output by the clock oscillator for the time of each gating signal, characterized by
— a second digital circuit (1) with
(4) means for generating start signals for the transmission of said light pulses,
(5) means for generating a plurality of different threshold signals, each one defining a trigger level of the gating signal circuit (16) for the signal pulses of the receiver (12),
(6) means for seperately storing the count results obtained with the counter (18) for different threshold levels for each one of a number of pluralities of light pulses with the clock oscillator (17) running independently,
(7) means for obtaining for each of said threshold levels the three count results with decreasing frequency of occurrence from the greatest downward in order to calculate the weighted mean of said three count results to represent a measure for the time of travel of the light pulses corresponding to the respective threshold level, and in order to determine the distance to be measured from the dependence of the obtained times of travel from said threshold levels.

6. Apparatus for electrooptical distance measurement as claimed in claim 5, thereby characterized, that the second digital circuit (1) comprises means (20) for generating window signals (43) for blanking out signal pulses (49) from generation of the gating signals, which signal pulses (49) define a given span of moments of reception of a light pulse and which means (20) transmit said generated window signals (43) to the gating signal circuit (16) of the first digital circuit, that the second digital circuit (1) comprises means (19) which in cooperation with said means (20) for generating the window signals (43) generate pairs of signal pulses (45, 49) simulating moments of transmission and reception of a light pulse, the ratio of the durations between the signal pulses (45, 49) of given pairs being known and not equal to unity, and that the second digital circuit (1) comprises means for calculating, by linear combination of the durations of gating signals found for the pairs of signal pulses (45, 49), the constant error of the first digital circuit occurring at the step of generating the count results representing the durations of the gating signals.

7. Apparatus for electrooptical distance measurement as claimed in one of claims 5 or 6, characterized by a limiter circuit (34) arranged in front of the input of the first digital circuit (16, 17, 18), said limiter circuit (34) limiting, to a given range of levels, the signal pulses (45, 49) to be processed, which define the moments of transmission and reception of a light pulse.

**Revendications**

1. Une méthode pour mesurer la distance entre un objet (22) et un point (5, 10) de référence dans laquelle un grand nombre d'impulsions de lumière sont successivement émises d'un émetteur (3) monté proche du point de référence vers l'objet et de là en retour vers un appareil (12) récepteur proche de l'émetteur (3), et dans laquelle des impulsions (45, 49) électriques sont produites au moyen d'un récepteur (12) photo-électrique, lesdites impulsions définissant les instants respectifs d'émission et de réception desdites impulsions de lumière, dans le but d'obtenir la durée de parcours desdites impulsions de lumière, et des signaux (46) de porte sont produits au moyen d'un circuit (16) à signaux de porte lesquels durent entre l'arrivée desdites impulsions de signal, et la durée de chaque signal (46) de porte est obtenue par comptage des impulsions d'horloge d'un oscillateur (17) à horloge au moyen d'un compteur (18) contrôlé par le circuit (16) à signaux de porte, caractérisée par le fait, qu'une pluralité de signaux (46) de porte est produite respectivement pour chacun d'au moins deux niveaux de seuil, lesdits signaux (46) de porte durant entre l'arrivée desdits niveaux de seuil aux respectives pentes de chaque paire d'impulsions (45, 49) définissant les instants d'émission et réception d'une impulsion de lumière, et que les résultats de comptage pour chacun desdits signaux de porte sont stockés, que l'oscillateur (17) à horloge est fait fonctionner librement au but de mettre hors de corrélation les instants de commutation du circuit (16) de porte des impulsions de l'oscillateur (17) à horloge, que la durée du signal de porte est obtenue pour chacun desdits niveaux de seuil en calculant la moyenne pondérée des trois résultats de comptage ayant une fréquence décroissante à partir du plus grand, et que la durée correspondant au temps de parcours des impulsions de lumière est déterminée par la dépendance de ladite durée des signaux de porte ainsi obtenus dudit niveau de seuil, ledit temps de parcours correspondant à la distance à mesurer.

2. Méthode selon la revendication 1, caractérisée par le fait, qu'un premier seuil est établi ayant un niveau approximativement égal au niveau maximal de bruit apparaissant au récepteur (12) photo-électrique des impulsions de lumière, que le niveau de bruit du récepteur (12) des impulsions de lumière par un choix de son point d'opération est établi ainsi, que la fréquence d'apparition de résultats fautifs de mesure des temps de parcours des impulsions provoquées par le bruit est inférieure à une limite donnée, qu'ensuite une durée de signaux de porte est déterminée qui correspond audit premier niveau de seuil, qu'un second seuil est établi ayant un niveau approximativement égal à deux fois le premier niveau de seuil et une seconde durée de signaux de porte est déterminée pour ledit second niveau de seuil, et que par interpolation linéaire à partir des premières et secondes paires déterminées de niveau et de durée une durée de signaux de porte correspondant à un seuil zéro est déterminée et utilisée comme temps de parcours des impulsions de lumière.

3. Méthode selon la revendication 2, caractérisée par le fait, que ledit temps de parcours est obtenu à partir de ladite première durée de signaux de porte par addition d'un temps constant de correction au cas où aucune durée de signaux de porte ne peut être obtenue pour le second niveau de seuil.

4. Méthode selon la revendication 1, caractérisée par le fait, que des impulsions (49) de signal définissant une période donnée d'instants de réception d'une impulsion de lumière sont bloquées pour la production des signaux de porte au moyen de signaux (43) de fenêtre, que d'une série périodique d'impulsions auxiliaires deux pluralités de paires d'impulsions (45, 49) de signal simulant des instants d'émission et de réception d'impulsions de lumière sont sélectionnés au moyen des signaux (43) de fenêtre pour la production des signaux (46) de porte, l'émission des impulsions de lumière eux-mêmes étant interrompue pendant cette phase et le rapport des durées entre les impulsions (45, 49) de signal de chacune desdites paires de respectivement chacune desdites pluralités de paires étant connu et inégal à l'unité, et que l'erreur constante étant commise pendant la phase de comptage de la durée de chaque signal de porte est calculée par une combinaison linéaire des durées obtenues pour les paires d'impulsions (45, 49) de signal de respectivement chacune desdites pluralités.

5. Un appareil pour la mesure électro-optique de distances pour accomplir la méthode selon une des revendications 1 à 3 avec

— un émetteur (2-7) pour l'émission successive d'un grand nombre d'impulsions de lumière en direction de l'objet (22) duquel la distance est à déterminer,

— un appareil (8-12) récepteur monté directement à côté de l'émetteur, ledit appareil récepteur recevant des impulsions de lumière diffusées par l'objet ainsi que les impulsions de lumière étant émises par une voie directe de référence à l'intérieur de l'appareil, et ledit appareil récepteur comprenant un récepteur (12) photo-électrique qui reçoit les impulsions de lumière émises en voie directe ainsi que ces impulsions diffusées par l'objet,

— un premier circuit digital avec

(1) un circuit (16) à signaux de porte attaché audit récepteur pour produire des signaux de porte chacun durant entre l'arrivée des impulsions de signal à la sortie du récepteur, chacune desdites impulsions de signal correspondant respectivement à l'instant d'émission ou de réception de chacune des impulsions de lumière,

(2) un oscillateur à horloge (17)

(3) un compteur (18) pour compter les impulsions d'horloge émises par l'oscillateur à horloge pendant la durée de chaque signal de porte, caractérisé par

— un second circuit (1) digital avec

(4) des moyens pour produire des signaux du départ pour l'émission desdites impulsions de lumière,

(5) des moyens pour produire une pluralité de différents signaux de seuil, chacun d'eux définissant un niveau de déclenchement du circuit (16) des signaux de porte pour les impulsions de signal du récepteur (12),

(6) des moyens pour le stockage individuel des résultats de comptage obtenus par le compteur (18) pour des différents niveaux de seuil pour chacune d'un nombre de pluralités d'impulsions de lumière, l'oscillateur à horloge (17) fonctionnant indépendamment,

(7) des moyens pour obtenir pour chacun desdits niveaux de seuil les trois résultats de comptage ayant une fréquence décroissante à partir du plus grand dans le but de calculer la moyenne pondérée desdits trois résultats de comptage pour représenter une mesure du temps de parcours des impulsions de lumière qui correspond au niveau respectif de seuil, et dans le but de déterminer la distance à mesurer par la dépendance des temps de parcours obtenus desdits niveaux de seuil.

6. Un appareil pour la mesure électro-optique de distances selon la revendication 5, caractérisé par le fait, que le second circuit (1) digital contient des moyens (20) qui produisent des signaux (43) de fenêtre pour bloquer, pour la production des signaux de porte, des impulsions (49) de signal définissant des instants donnés de réception d'une impulsion de lumière, et qui transmettent ces signaux (43) de fenêtre au circuit (16) à signaux de porte du premier circuit digital, que le second circuit (1) digital contient des moyens (19) qui produisent, en combinaison avec les moyens (20) pour la production des signaux (43) de fenêtre, des paires d'impulsions (45, 49) de signal simulant des instants d'émission et de réception d'une impulsion de lumière, le rapport des durées entre les impulsions (45, 49) de signal de paires données étant connu et différent de l'unité, et que le second circuit (1) digital comporte des moyens qui, par une combinaison linéaire des durées des signaux de porte obtenues pour les paires d'impulsions (45, 49) de signal, calculent l'erreur constante du premier circuit digital commise pendant la phase de production des résultats de comptage représentant les durées des signaux de porte.

7. Un appareil pour la mesure électro-optique de distances selon une des revendications 5 ou 6, caractérisé par un circuit (34) limitant situé en amont du premier circuit digital (16, 17, 18), ledit circuit (34) limitant à une gamme donnée les impulsions (45, 49) de signal à exploiter définissant les instants d'émission et de réception d'une impulsion de lumière.

Fig. 1

Fig. 2

39

38

41

37

35

33

−2 V

−5,2 V

+5V

36

34

32

16

31

40

**Fig. 3**

# Fig.4